# FASCICULE DE BREVET EUROPEEN

(11) **EP 2 863 305 B1**
(45) Date de publication et mention de la délivrance du brevet: **08.06.2022**
(21) Numéro de dépôt: 14187212.7
(22) Date de dépôt: 30.09.2014
(51) Int. Cl.: G06F 9/50

(54) **Double déport de traitement vers dispositif de traitement supplémentaire et central**
Doppelvorschubvorrichtung zur Verarbeitung in Richtung der zusätzlichen und zentralen Verarbeitungsvorrichtung
Double processing offload towards additional processing device and unit

(30) Priorité: 01.10.2013 FR 1359501
(43) Date de publication de la demande: 22.04.2015
(73) Titulaire: BULL, 78340 Les Clayes Sous Bois (FR)
(72) Inventeur: Jeaugey, Sylvain, 38240 Meylan (FR); Menyhart, Zoltan, 38100 Grenoble (FR); Temporelli, Frédéric, 38130 Echirolles (FR)
(74) Mandataire: Novagraaf Technologies

(56) Documents cités:
- US-A1- 2007 234 007
- US-A1- 2009 328 078
- US-A1- 2012 159 480
- US-B1- 7 689 702

## Description

### DOMAINE DE L'INVENTION

L'invention concerne les plateformes de traitement de données. Plus particulièrement, elle concerne le déport de traitements vers des dispositifs de traitement supplémentaire.

### CONTEXTE DE L'INVENTION

D'une façon générale, les plateformes de traitement de données comprennent un dispositif de traitement généraliste, dit CPU (pour *Central Processing Unit,* en langue anglaise) et des mémoires. Ces mémoires contiennent des applications et un système d'exploitation, OS (pour *Operating System*, en anglais) permettant notamment d'assurer les interactions entre les applications, le dispositif de traitement CPU et d'autres organes de la plateforme (interfaces d'entrées/sorties, etc.)

Ce modèle est très efficace car notamment très flexible puisqu'une même plateforme peut alors déployer une variété quasi-infinie d'applications logicielles, et peut faire exécuter au dispositif de traitement CPU toutes sortes de tâches.

Toutefois, le déport de l'exécution de certaines tâches sur des dispositifs de traitement périphériques peut apporter des avantages. D'une part, cela permet de soulager le dispositif central (CPU) de ces traitements, et d'autre part cela permet de tirer profit d'architectures plus spécialisés pour un type de tâche donné. Cette spécialisation et l'adéquation du dispositif périphérique à la tâche à exécuter permet de gagner en performance.

Ce mécanisme est généralement connu sous le terme anglais de « hardware offloading » que l'on peut traduire par déport matériel.

Des exemples de tels mécanismes de déport matériel peuvent se trouver dans le domaine des réseaux informatiques, notamment pour l'implémentation des piles protocolaires TCP/IP.

Le brevet US 5,355,453 intitulé « Parallel I/O Network File Server Architecture » décrit un mécanisme de déport de traitement dans le contexte du protocole UDP (« *User Datagram Protocol »).* Ces principes ont ensuite été étendus au protocole TCP (« *Transport Communication Protocol »).* Il est ainsi connu de déporter une partie fortement spécialisée du traitement lié à une pile protocolaire TCP/IP sur un dispositif matériel supplémentaire dédié. Cette partie du traitement est le calcul de sommes de contrôle (ou « checksum » en langue anglaise) qui sont nécessaire pour encoder ou décoder des paquets protocolaires.

D'autres exemples de déports sont le déport de la gestion des entrées/sorties dans une architecture DMA (« Direct Memory Access »), ou bien le déport du codage et décodage vidéo (« CODEC ») ; etc.

Ces mécanismes de déport présentent des avantages certains, mais leurs utilisations sont rendues difficiles par les contraintes reposant sur les tâches pouvant être déportées.

En effet, la tâche déportée doit pouvoir être entièrement effectuée par le dispositif matériel supplémentaire dédié. Or, le fait même qu'il soit dédié à un type de traitement limite les tâches qui peuvent être déportées, ainsi que les évolutions et généralisations possibles de ces tâches.

Cela nécessite donc de ne déporter sur ce dispositif matériel supplémentaire que des tâches n'étant pas susceptibles de déclencher des traitements non supportés par celui-ci ; ou bien de faire en sorte que ce dispositif supplémentaire soit à même de supporter une vaste gamme de tâches. Dans les deux situations, la mise en œuvre du mécanisme de déport est complexe et coûteuse pour ces raisons-là.

La demande de brevet US2012/0159480 présente par ailleurs un mécanisme de délégation de traitement entre systèmes d'information distants.

### RESUME DE L'INVENTION

Le but de la présente invention est de fournir une solution palliant au moins partiellement les inconvénients précités.

A cette fin, la présente invention propose un procédé pour exécuter une tâche sur un système de traitement de données, comportant un dispositif matériel central et un dispositif matériel supplémentaire, ladite tâche étant exécutée par un fil de traitement dudit dispositif matériel central, ledit procédé comportant :
une étape de déport de l'exécution d'une première partie de ladite tâche vers ledit dispositif matériel supplémentaire ;
une étape d'appel par ledit dispositif matériel supplémentaire à des fonctionnalités dudit dispositif matériel central, déclenché par ladite première partie ;
une étape d'exécution d'une seconde partie de ladite tâche formant sous-partie de ladite première partie par un fil de traitement de service dudit dispositif matériel central, lesdits fils de traitement et de service partageant un même contexte logiciel de ladite tâche.

Suivant des modes de réalisation, l'invention comprend une ou plusieurs des caractéristiques suivantes qui peuvent être utilisées séparément ou en combinaison partielle entre elles ou en combinaison totale entre elles :
- ledit dispositif matériel central transmet une notification audit dispositif matériel supplémentaire ;
- à l'issue de l'exécution de ladite première partie de ladite tâche, ledit dispositif matériel supplémentaire transmet une notification audit dispositif matériel central ;
- les transmissions de données entre ledit dispositif matériel supplémentaire et ledit dispositif matériel central transitent par un système d'exploitation exécute par ledit dispositif matériel central.

Un autre aspect de l'invention concerne un programme d'ordinateur comprenant des instructions qui une fois chargées sur un système de traitement de l'information, sont aptes à mettre en œuvre le procédé précédemment décrit.

Un autre aspect de l'invention concerne un système de traitement de données, comportant un dispositif matériel central et un dispositif matériel supplémentaire, ledit dispositif matériel central étant adapté pour exécuter une tâche par un fil de traitement, et pour déclencher le déport de l'exécution d'une première partie de ladite tâche vers ledit dispositif matériel supplémentaire ; et dans lequel ledit dispositif matériel supplémentaire est adapté pour faire appel à des fonctionnalités dudit dispositif matériel central, déclenché par ladite première partie, et ledit dispositif matériel central fait exécuter une seconde partie de ladite tâche formant sous-partie de ladite première partie par un fil de traitement de service, lesdits fils de traitement et de service partageant un même contexte logiciel de ladite tâche.

Suivant des modes de réalisation, ce système comprend une ou plusieurs des caractéristiques suivantes qui peuvent être utilisées séparément ou en combinaison partielle entre elles ou en combinaison totale entre elles :
- à l'issue de l'exécution de ladite seconde partie de ladite tâche, ledit dispositif matériel central transmet une notification audit dispositif matériel supplémentaire ;
- à l'issue de l'exécution de ladite première partie de ladite tâche, ledit dispositif matériel supplémentaire transmet une notification audit dispositif matériel central.
- les transmissions de données entre ledit dispositif matériel supplémentaire et ledit dispositif matériel central transitent par un système d'exploitation exécuté par ledit dispositif matériel central ;
- le système comporte en outre un bus de communication pour les transmissions de données entre ledit dispositif matériel supplémentaire et ledit dispositif matériel central.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'architecture selon un mode de réalisation de l'invention.
La figure 2 représente schématiquement un exemple de déroulement dans le temps d'un procédé selon un mode de réalisation de l'invention.

### DESCRIPTION DETAILLEE DE L'INVENTION

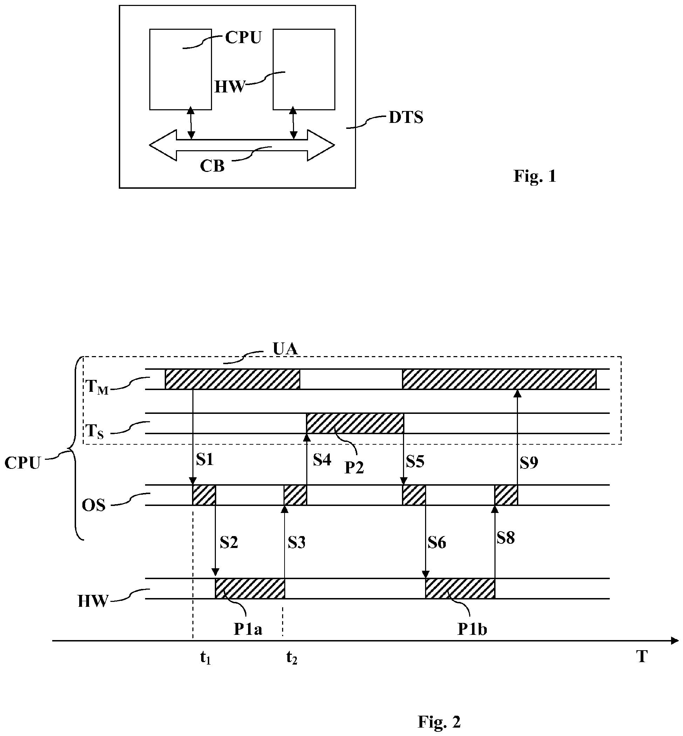

Ainsi que représenté dans l'exemple de la figure 1, le système de traitement de données DTS comporte un dispositif matériel central CPU et un dispositif matériel supplémentaire HW. Ils peuvent être connectés par un bus de communication CM qui assure la transmission des données entre ces deux dispositifs, ainsi qu'éventuellement avec d'autres dispositifs non représentés.

Le dispositif matériel central CPU permet d'exécuter des tâches. Ces tâches peuvent être également appelées processus et peuvent être définies comme un ensemble d'instructions à exécuter chargée dans la mémoire vive d'un dispositif de traitement, ainsi que, généralement, un espace d'adressage en mémoire vive pour y stocker la pile, les données de travail, etc. La tâche est typiquement stockée en mémoire morte (ou mémoire de masse) et chargée en mémoire vive au moment de l'exécution.

Les tâches sont exécutées par le dispositif matériel central (ou processeur) CPU par l'intermédiaire d'un système d'exploitation OS. Le système d'exploitation est un ensemble d'instructions en charge d'allouer les ressources (mémoire, temps du processeur, entrées/sorties...) nécessaires aux différentes tâches, de s'assurer que le fonctionnement d'une tâche n'interfère pas avec celui des autres, de fournir aux tâches des moyens d'accès simplifiés et uniformes aux différents moyens matériels déployées dans le système de traitement DTS, etc.

D'une certaine façon, le système d'exploitation OS est également composé de tâches, mais nous appellerons ici « tâches » les programmes informatiques autres que le système d'exploitation OS mais fonctionnant avec son support.

Le dispositif matériel central CPU est typiquement un processeur ou un ensemble de processeurs. Ces processeurs sont des dispositifs matériels généralistes adaptés pour exécuter des tâches variées. Il s'agit typiquement de microprocesseurs.

Le système d'exploitation OS est également adapté pour permettre l'exécution de ces tâches variées. Des exemples de systèmes d'exploitation comprennent les systèmes Windows de la société Microsoft, les systèmes de la famille Unix, les systèmes pour systèmes embarqués comme Android de la société Google, iOS de la société Apple, etc.

Les dispositifs matériels centraux CPU et les systèmes d'exploitation sont généralement « multi-fils » ou « multithread » selon la terminologie en langue anglaise plus courante. Ils sont capables de gérer plusieurs fils d'exécution associés à une tâche ou à une partie de tâche différente.

Certains systèmes d'exploitation peuvent être dédiés (ou adaptés) à des microprocesseurs et à des systèmes de traitement de données DTS particuliers. C'est notamment le cas des supercalculateurs pour lesquels les architectures sont spécifiques et nécessitent l'élaboration ou l'adaptation d'un système d'exploitation spécifique. Dans cette situation également, tant le dispositif matériel central CPU et le système d'exploitation OS sont généraliste au sens où ils permettent d'exécuter des tâches dont le contenu est varié et non connu à l'avance.

Le dispositif matériel supplémentaire HW est quant à lui spécifiquement dédié à un type de tâche ou à une gamme réduite de tâches possibles. Cette adéquation de la tâche au dispositif matériel l'exécutant permet d'optimiser l'architecture de ce dispositif afin :
- De réduire les coûts ;
- D'augmenter les performances, puisque l'architecture est adaptée à la tâche plutôt que prévue pour l'exécution de toutes tâches possibles.

Le dispositif matériel supplémentaire HW et le dispositif matériel central CPU répondent donc à des problématiques et à des contraintes architecturales très différentes, voire contradictoires.

Un dispositif matériel supplémentaire HW peut par exemple être adapté à l'encodage et au décodage de données audio ou vidéo. Autrement, il peut mettre en œuvre un CODEC ou partie d'un CODEC. Cela permet de décharger le dispositif central CPU de cette tâche fortement calculatoire et lui permettre d'allouer le temps machine nécessaire à d'autres tâches. En outre, le dispositif supplémentaire étant adapté à ce type de tâche, il est architecturé en fonction et permet d'obtenir des rendements supérieurs (par exemple une vitesse d'encodage/décodage plus élevée).

Le dispositif matériel central CPU et le dispositif matériel supplémentaire HW peuvent communiquer de différentes façons connues en soi. Notamment, un bus de communication CM peut assurer la transmission des données entre les deux dispositifs matériels. Ces données transmises entre les deux dispositifs seront explicités plus loin ; elles comprennent des commandes, des notifications et tout flux d'information permettant la coopération entre une partie de la tâche exécutée par le dispositif central et une autre partie de la tâche exécutée par le dispositif supplémentaire.

La figure 2 illustre plus précisément le déroulement d'un déport d'une partie du traitement. Une tâche à exécuter est représentée par les zones hachurées sur les 4 lignes de temps de la figure.

La tâche est initialement exécutée par un fil de traitement T_{M} du dispositif matériel central CPU. La façon dont elle est déclenchée est classique en soi et hors du propos de la présente invention. Ce fil de traitement T_{M} appartient à une zone applicative UA du dispositif central, par opposition à la zone système associé au système d'exploitation OS.

À l'instant t₁, la tâche arrive à une partie (P1a, P2, Plb) du traitement qui peut faire l'objet d'un déport d'exécution. La détermination de la partie pouvant faire l'objet d'un déport est effectuée par la tâche elle-même, dans les instructions de programme la constituant.

Le fil d'exécution (ou de traitement) T_{M} déclenche le déport en émettant une requête S1 destinée au dispositif matériel supplémentaire HW. Cette requête contient les informations nécessaires au traitement de la partie de la tâche faisant l'objet du déport. Ces informations peuvent notamment contenir des données à traiter, ou bien l'adresse des données à traiter, ou bien un port sur lesquels arrive un flux de données à traiter, etc.

La requête S1 peut transiter par le système d'exploitation OS du dispositif matériel central CPU. Le système d'exploitation peut présenter une interface standardisée pour l'accès au mécanisme de déport, de sorte que la tâche (et donc les programmeurs) n'ait besoin de connaître que les fonctionnalités et capacités du (ou des) dispositif matériel supplémentaire et non l'ensemble des caractéristiques techniques et notamment les ports d'accès, la façon de déployer les données etc.

En ce cas, le système d'exploitation OS reçoit la requête S1 et, après une mise en forme fonction des caractéristiques techniques du dispositif matériel supplémentaire, il la retransmet (sous cette forme modifiée) à ce dernier. La transmission peut passer par le bus de communication CB ainsi que précisé précédemment.

Il peut également être prévu un contournement du système d'exploitation OS (« OS Bypass », en terminologie anglaise). Dans cette mise en œuvre, le fil de traitement T_{M} communique directement avec le dispositif matériel supplémentaire HW pour lui transmettre la requête S1.

Une fois reçu les informations du fil de traitement T_{M} (directement ou via le système d'exploitation OS), le dispositif matériel supplémentaire HW peut exécuter la partie de la tâche qui est déportée sur lui.

Ce déport peut interrompre l'exécution du fil de traitement T_{M} si celui-ci doit attendre les résultats de l'exécution de cette partie (P1a, P2, P1b) de tâche pour poursuivre ; ou bien l'exécution du fil de traitement T_{M} se poursuit en parallèle de l'exécution du déport d'une partie de la tâche, ainsi que représenté sur la figure 2.

Pendant son exécution, cette partie de la tâche déportée détermine qu'une sous-partie nécessite des fonctionnalités du dispositif matériel central CPU. Ces fonctionnalités peuvent ne pas être disponibles sur le dispositif matériel supplémentaire HW plus spécialisé, ou bien pas de façon suffisamment efficace.

Cela peut être le cas lorsque dans un traitement spécialement dédié au dispositif matériel supplémentaire HW survient un cas particulier pas ou difficilement traitable par celui-ci.

Une autre situation peut consister à déporter une première partie de la tâche en sachant qu'une sous-partie nécessite les fonctionnalités du dispositif central CPU.

Cette façon de faire permet aussi à la tâche (et donc aux programmateurs) de faire abstraction de cette problématique et de laisser les mécanismes de l'invention gérer cela de façon transparente.

Cette façon de faire permet aussi de gérer plus facilement les mises à jour du logiciel intégré au dispositif supplémentaire (« firmware »). En prévision des mises à jour futures, une partie du traitement peut être déportée, mais une sous-partie peut être encore exécutée par le dispositif central CPU en attendant ces mises à jour.

Dans l'exemple de la figure 2, le dispositif matériel supplémentaire HW détermine le besoin d'appel aux fonctionnalités du dispositif central CPU à un instant t2. Ce besoin est déclenché par l'exécution d'une sous-partie P1a de la tâche.

Cette sous partie P1a forme avec les sous-parties P2 et P1b, la partie de la tâche qui a été déportée sur le dispositif supplémentaire.

La sous-partie P2 correspond à la partie de la tâche qui a été déportée vers le dispositif supplémentaire mais que celui-ci ne peut (ou ne souhaite) exécuter et pour lequel un appel aux fonctionnalités du dispositif central CPU est requis.

Selon un mode de réalisation de l'invention, le dispositif matériel supplémentaire HW envoie alors une interruption S3 vers le système d'exploitation OS du dispositif matériel central CPU.

Le système d'exploitation OS est prévu pour réagir à cette interruption en transmettant la demande à un fil de traitement de service T_{S}.

Le fil de service T_{S} exécute alors la partie P2 de la tâche qui lui est transmise, cette partie P2 étant donc une sous-partie de la partie déportée.

Le fil de service peut être exécuté sur le même processeur que le fil de traitement T_{M} ou bien sur un processeur différent du dispositif matériel central dans le cas où celui-ci est multiprocesseur. Il peut être intéressant que les fils de traitement et de service soient exécutés par un même processeur pour des raisons de performances du fait de la localité entre le processeur et les données à traiter.

Le fil de service T_{S} peut être créé par le système d'exploitation OS ou par le fil de traitement T_{M} exécutant la tâche. Dans ce dernier cas, le programme associé à la tâche peut faire appel à une bibliothèque chargée par le programme.

La partie de tâche P2 peut ainsi être exécuté en tirant profit des fonctionnalités du dispositif central CPU et ne pas être contrainte par les spécificités du dispositif supplémentaires.

En outre, les deux fils partagent le même contexte logiciel de la tâche. Il serait sinon délicat de synchroniser des données de contexte entre les deux dispositifs. Également, le fil de service peut aussi ainsi agir avec les mêmes privilèges que la tâche exécutée sur le dispositif central, ce qui est intéressant et important dans le cas où les autres dispositifs matériels ne disposent pas des mêmes privilèges.

À l'issue de l'exécution de cette seconde partie P2 de la tâche, le dispositif matériel central CPU peut transmettre une notification S5, S6 au dispositif matériel supplémentaire HW

Cette notification peut transiter par le système d'exploitation OS ou bien être transmise directement au dispositif matériel supplémentaire HW

La notification peut contenir un statut, indiquant que l'exécution sur le fil de service s'est bien déroulée, mais aussi des résultats de cette exécution. Ces résultats peuvent être nécessaire pour déclencher la reprise de l'exécution de la tâche sur le dispositif matériel supplémentaire (partie Plb).

Il est à noter que selon un mode de réalisation de l'invention, et selon les types de tâches à exécuter il est tout à fait possible que l'exécution d'une partie Pla/Plb de la tâche se poursuive en parallèle de l'exécution de la seconde partie P2 par le fil de service Ts. L'invention couvre en effet différents modes de réalisations possibles qui peuvent dépendre des applications.

De la même façon, à l'issue de l'exécution de la première partie (P1a, P2, Plb) de la tâche, le dispositif matériel supplémentaire HW peut transmettre une notification S8, S9 audit dispositif matériel central CPU. Cette notification peut transiter par le système d'exploitation OS : il peut alors être amené à modifier la notification reçu S8 avant de la transmettre au fil de traitement T_{M} (notification S9).

Alternativement, le mécanisme matériel supplémentaire HW peut ne pas notifier le fil de traitement T_{M}. En effet, dans certaines situations, il est possible pour la tâche de demander un déport de l'exécution d'une partie de cette tâche sans être intéressé par la terminaison de celle-ci. Il est possible alors de prévoir que le fil de traitement T_{M} transmette ultérieurement une commande d'arrêt de la partie déportée de la tâche.

Bien entendu, la présente invention n'est pas limitée aux exemples et au mode de réalisation décrits et représentés, mais elle est susceptible de nombreuses variantes accessibles à l'homme de l'art.

## Revendications

1. Procédé pour exécuter une tâche sur un système de traitement de données (DTS), comportant un dispositif matériel central (CPU) et un dispositif matériel supplémentaire (HW), ladite tâche étant exécutée par un fil de traitement (T_{M}) dudit dispositif matériel central, ledit procédé comportant
- une étape (S1, S2) de déport de l'exécution d'une première partie (P1a, P1b, P2) de ladite tâche vers ledit dispositif matériel supplémentaire (HW) ;
- une étape (S3, S4) d'appel par ledit dispositif matériel supplémentaire (HW) à des fonctionnalités dudit dispositif matériel central (CPU), déclenché par ladite première partie ;
- une étape d'exécution d'une seconde partie (P2) de ladite tâche formant sous-partie de ladite première partie par un fil de traitement de service (T_{S}) dudit dispositif matériel central, lesdits fils de traitement (T_{M}) et de service (T_{S}) partageant un même contexte logiciel de ladite tâche.

2. Procédé selon la revendication précédente, dans lequel, à l'issue de l'exécution de ladite seconde partie (P2) de ladite tâche, ledit dispositif matériel central (CPU) transmet une notification (S5, S6) audit dispositif matériel supplémentaire (HW).

3. Procédé selon l'une des revendications 1 ou 2, dans lequel à l'issue de l'exécution de ladite première partie de ladite tâche, ledit dispositif matériel supplémentaire (HW) transmet une notification (S8, S9) audit dispositif matériel central (CPU).

4. Procédé selon l'une des revendications précédentes, dans lequel les transmissions de données entre ledit dispositif matériel supplémentaire (HW) et ledit dispositif matériel central (CPU) transitent par un système d'exploitation (OS) exécutée par ledit dispositif matériel central.

5. Programme d'ordinateur comprenant des instructions qui une fois chargées sur un système de traitement de l'information, sont aptes à mettre en œuvre le procédé selon l'une des revendications 1 à 4.

6. Système de traitement de données (DTS), comportant un dispositif matériel central (CPU) et un dispositif matériel supplémentaire (HW), ledit dispositif matériel central (CPU) étant adapté pour exécuter une tâche par un fil de traitement (T_{M}), et pour déclencher le déport de l'exécution d'une première partie (P1a, P1b, P2) de ladite tâche vers ledit dispositif matériel supplémentaire (HW) ; et dans lequel ledit dispositif matériel supplémentaire est adapté pour faire appel à des fonctionnalités dudit dispositif matériel central (CPU), déclenché par ladite première partie, et ledit dispositif matériel central (CPU) fait exécuter une seconde partie (P2) de ladite tâche formant sous-partie de ladite première partie par un fil de traitement de service (Ts), lesdits fils de traitement (TM) et de service (TS) partageant un même contexte logiciel de ladite tâche.

7. Système de traitement de données (DTS) selon la revendication précédente, dans lequel, à l'issue de l'exécution de ladite seconde partie (P2) de ladite tâche, ledit dispositif matériel central (CPU) transmet une notification (S5, S6) audit dispositif matériel supplémentaire (HW).

8. Système de traitement de données (DTS) selon l'une des revendications 6 ou 7, dans lequel à l'issue de l'exécution de ladite première partie de ladite tâche, ledit dispositif matériel supplémentaire (HW) transmet une notification (S8, S9) audit dispositif matériel central (CPU).

9. Système de traitement de données (DTS) selon l'une des revendications 6 à 8, dans lequel les transmissions de données entre ledit dispositif matériel supplémentaire (HW) et ledit dispositif matériel central (CPU) transitent par un système d'exploitation (OS) exécutée par ledit dispositif matériel central.

10. Système de traitement de données (DTS) selon l'une des revendications 6 à 9, comportant en outre un bus de communication (CB) pour les transmissions de données entre ledit dispositif matériel supplémentaire (HW) et ledit dispositif matériel central (CPU)

## Patentansprüche

1. Verfahren zum Ausführen einer Aufgabe auf einem eine zentrale Hardwarevorrichtung (CPU) und eine zusätzliche Hardwarevorrichtung (HW) umfassenden Datenverarbeitungssystem (DTS), wobei die Aufgabe durch einen Verarbeitungs-Thread (T_{M}) der zentralen Hardwarevorrichtung ausgeführt wird, wobei das Verfahren Folgendes umfasst:
- einen Schritt (S1, S2) des Verschiebens der Ausführung eines ersten Teils (P1a, P1b, P2) der Aufgabe zu der zusätzlichen Hardwarevorrichtung (HW);
- einen Schritt (S3, S4) des durch den ersten Teil ausgelösten Aufrufens von Funktionalitäten der zentralen Hardwarevorrichtung (CPU) durch die zusätzliche Hardwarevorrichtung (HW);
- einen Schritt des Ausführens eines zweiten Teils (P2) der Aufgabe, der einen Unterteil des ersten Teils bildet, durch einen Dienstverarbeitungs-Thread (Ts) der zentralen Hardwarevorrichtung, wobei sich der Verarbeitungs-Thread (T_{M}) und der Dienstverarbeitungs-Thread (Ts) denselben Softwarekontext der Aufgabe teilen.

2. Verfahren nach dem vorhergehenden Anspruch, wobei die zentrale Hardwarevorrichtung (CPU) nach der Ausführung des zweiten Teils (P2) der Aufgabe eine Benachrichtigung (S5, S6) an die zusätzliche Hardwarevorrichtung (HW) überträgt.

3. Verfahren nach einem der Ansprüche 1 oder 2, wobei die zusätzliche Hardwarevorrichtung (HW) nach Abschluss der Ausführung des ersten Teils der Aufgabe eine Benachrichtigung (S8, S9) an die zentrale Hardwarevorrichtung (CPU) überträgt.

4. Verfahren nach einem der vorhergehenden Ansprüche, wobei die Datenübertragungen zwischen der zusätzlichen Hardwarevorrichtung (HW) und der zentralen Hardwarevorrichtung (CPU) über ein von der zentralen Hardwarevorrichtung ausgeführtes Betriebssystem (OS) ablaufen.

5. Computerprogramm, Anweisungen umfassend, die, nachdem sie auf ein Informationsverarbeitungssystem geladen wurden, geeignet sind, das Verfahren nach einem der Ansprüche 1 bis 4 auszuführen.

6. Datenverarbeitungssystem (DTS), bestehend aus einer zentralen Hardwarevorrichtung (CPU) und einer zusätzlichen Hardwarevorrichtung (HW), wobei die zentrale Hardwarevorrichtung (CPU) dazu ausgelegt ist, eine Aufgabe durch einen Verarbeitungs-Thread (T_{M}) auszuführen und die Verschiebung der Ausführung eines ersten Teils (P1a, P1b, P2) der Aufgabe zu der zusätzlichen Hardwarevorrichtung (HW) auszulösen; und wobei die zusätzliche Hardwarevorrichtung dazu ausgelegt die, ausgelöst durch den ersten Teil die Funktionalitäten der zentralen Hardwarevorrichtung (CPU) aufzurufen, und die zentrale Hardwarevorrichtung (CPU) einen zweiten Teil (P2) der Aufgabe, der einen Unterteil des ersten Teils bildet, durch einen Dienstverarbeitungs-Thread (Ts) ausführen lässt, wobei sich der Verarbeitungs-Thread (TM) und der Dienstverarbeitungs-Thread (TS) den gleichen Softwarekontext der Aufgabe teilen.

7. Datenverarbeitungssystem (DTS) nach dem vorhergehenden Anspruch, wobei die zentrale Hardwarevorrichtung (CPU) nach der Ausführung des zweiten Teils (P2) der Aufgabe eine Benachrichtigung (S5, S6) an die zusätzliche Hardwarevorrichtung (HW) überträgt.

8. Datenverarbeitungssystem (DTS) nach einem der Ansprüche 6 oder 7, wobei die zusätzliche Hardwarevorrichtung (HW) nach Abschluss der Ausführung des ersten Teils der Aufgabe eine Benachrichtigung (S8, S9) an die zentrale Hardwarevorrichtung (CPU) überträgt.

9. Datenverarbeitungssystem (DTS) nach einem der vorhergehenden Ansprüche 6 bis 8, wobei die Datenübertragungen zwischen der zusätzlichen Hardwarevorrichtung (HW) und der zentralen Hardwarevorrichtung (CPU) über ein von der zentralen Hardwarevorrichtung ausgeführtes Betriebssystem (OS) ablaufen.

10. Datenverarbeitungssystem (DTS) nach einem der Ansprüche 6 bis 9, ferner umfassend einen Kommunikationsbus (CB) für Datenübertragungen zwischen der zusätzlichen Hardwarevorrichtung (HW) und der zentralen Hardwarevorrichtung (CPU)

## Claims

1. Method for executing a task on a data processing system (DTS) comprising a central hardware device (CPU) and an additional hardware device (HW), said task being executed by a processing thread (T_{M}) of said central hardware device, said method comprising
- a step (S1, S2) of offloading the execution of a first part (P1a, P1b, P2) of said task to said additional hardware device (HW);
- a step (S3, S4) of said additional hardware device (HW) calling on functionalities of said central hardware device (CPU), which call is triggered by said first part;
- a step of a second part (P2) of said task, which second task forms a sub-part of said first part, being executed by a service processing thread (T_{S}) of said central hardware device, said processing thread (T_{M}) and service processing thread (T_{S}) sharing the same software context of said task.

2. Method according to the preceding claim, wherein, upon completion of the execution of said second part (P2) of said task, said central hardware device (CPU) transmits a notification (S5, S6) to said additional hardware device (HW).

3. Method according to either claim 1 or claim 2, wherein, upon completion of the execution of said first part of said task, said additional hardware device (HW) transmits a notification (S8, S9) to said central hardware device (CPU).

4. Method according to any of the preceding claims, wherein the data transmissions between said additional hardware device (HW) and said central hardware device (CPU) pass via an operating system (OS) executed by said central hardware device.

5. Computer program comprising instructions which, once loaded onto an information processing system, are capable of implementing the method according to any of claims 1 to 4.

6. Data processing system (DTS), comprising a central hardware device (CPU) and an additional hardware device (HW), said central hardware device (CPU) being suitable for executing a task by means of a processing thread (T_{M}), and triggering the offloading of the execution of a first part (P1a, P1b, P2) of said task to said additional hardware device (HW); and wherein said additional hardware device is suitable for calling on functionalities of said central hardware device (CPU), which call is triggered by said first part, and said central hardware device (CPU) causes a second part (P2) of said task, which second parts forms a sub-part of said first part, to be executed by a service processing thread (Ts), said processing thread (T_{M}) and service processing thread (Ts) sharing the same software context of said task.

7. Data processing system (DTS) according to the preceding claim, wherein, upon completion of the execution of said second part (P2) of said task, said central hardware device (CPU) transmits a notification (S5, S6) to said additional hardware device (HW).

8. Data processing system (DTS) according to either claim 6 or claim 7, wherein, upon completion of the execution of said first part of said task, said additional hardware device (HW) transmits a notification (S8, S9) to said central hardware device (CPU).

9. Data processing system (DTS) according to any of claims 6 to 8, wherein the data transmissions between said additional hardware device (HW) and said central hardware device (CPU) pass via an operating system (OS) executed by said central hardware device.

10. Data processing system (DTS) according to any of claims 6 to 9, further comprising a communication bus (CB) for data transmissions between said additional hardware device (HW) and said central hardware device (CPU).
